# EUROPÄISCHE PATENTANMELDUNG

(11) **EP 1 717 008 A1**
(43) Veröffentlichungstag der Anmeldung: **02.11.2006**
(21) Anmeldenummer: 06405129.5
(22) Anmeldetag: 27.03.2006
(51) Int. Cl.: B29C 44/34, B29B 7/32, B01F 5/04

(54) **Vorrichtung zum Imprägnieren einer Polymerschmelze mit einem Fluid, das als ein Treibmittel oder Additiv vorgesehen ist**

(30) Priorität: 25.04.2005 EP 05405314
(71) Anmelder: Sulzer Chemtech AG, 8404 Winterthur (CH)
(72) Erfinder: Habibi-Naini, Sasan, Dr., 8486 Rikon (CH)
(74) Vertreter: Sulzer Management AG

(57) **Zusammenfassung**

Die Vorrichtung (1) ist zum Imprägnieren einer Schmelze von Polymer (2) mit einem Fluid (7) vorgesehen. Das Fluid kann ein Treibmittel oder ein Additiv sein. Ein Imprägnieren mit dem Treibmittel wird insbesondere zwecks Herstellung geschäumter Formteile mit einer Spritzgiessmaschine durchgeführt. Ein Imprägnierungskörper (10) umfasst einen Schmelzekanal (50) und ein Kanalsystem (70) zur Fluideinspeisung. Das in diesem System geführte Fluid ist durch gasdurchlässiges Material (5'), insbesondere Sintermetall, von einem im Schmelzekanal geführten Schmelzestrom (2') getrennt. Der Imprägnierungskörper umfasst eine Vielzahl von Schmelzekanälen, die beispielsweise jeweils durch Materialabtrag aus einem Stück des gasdurchlässigen Materials gefertigt sind. Jeder Schmelzekanal weist zwischen einem Ein- und Austritt (50a, 50b) an dessen inneren Oberfläche eine die Imprägnierung ermöglichende Offenporigkeit auf. Die Schmelzekanäle können zur Förderung der Verteilung des eindiffundierten Fluides im Schmelzestrom statische Mischer (6) enthalten.

## Beschreibung

Die Erfindung betrifft eine Vorrichtung zum Imprägnieren einer Polymerschmelze mit einem Fluid, das als ein Treibmittel oder Additiv vorgesehen ist, gemäss Oberbegriff von Anspruch 1. Sie betrifft auch Verwendungen der Vorrichtung, insbesondere zur Herstellung geschäumter Polymerkörper durch Extrusion oder als Formteile in einer Spritzgiessmaschine.

In der DE-A- 198 53 021 sind Spritzgiessverfahren und entsprechende Vorrichtungen beschrieben, mit welchen geschäumte Polymerformteile herstellbar sind. Offenbart wird eine Vorrichtung, die eine konventionelle Spritzgiessmaschine umfasst und mit der ein physikalisches Treibmittel (z.B. Stickstoff, Kohlendioxid, Wasser) unter Verwendung eines Gasdosiersystems in eine Polymerschmelze eingebracht werden kann. Das Treibmittel wird gemäss einer beschriebenen Ausführungsform an den inneren Oberflächen eines Ringspaltkanals mit einem in diesem Kanal fliessenden Schmelzestrom in Kontakt gebracht, so dass eine Imprägnierung des Polymers mit dem Treibmittel durch Diffusion erfolgen kann. Der Ringspaltkanal ist durch zwei Hohlzylinder aus porösem Sintermetall gebildet, durch deren Wände eine homogene Eingasung des Treibmittels über eine grosse Grenzfläche ermöglicht wird. Eine derartige, aus Sintermetall hergestellte Einrichtung wird im Folgenden als Imprägnierungskörper bezeichnet.

Der die beiden Hohlzylinder umfassende Imprägnierungskörper der bekannten Vorrichtung hat den Nachteil, dass das Volumen, das man für diese Einrichtung zur Verfügung zu stellen hat, relativ gross ist. Soll der Strom der zu imprägnierenden Polymerschmelze um einen Faktor S vergrössert werden ("scale-up"), so nimmt der Durchmesser des Imprägnierungskörpers im Wesentlichen linear mit S zu; hingegen vergrössert sich das Volumen quadratisch mit S. (Die Länge des Ringspaltkanals wird dabei konstant gehalten.) Wünschenswert wäre es, dass das Volumen weniger stark zunimmt, möglichst nur linear mit dem Faktor S. Mit anderen Worten, es soll eine Imprägnierungskapazität der Vorrichtung möglichst proportional zum Volumen des Imprägnierungskörpers sein.

Aufgabe der Erfindung ist es, eine Vorrichtung zum Imprägnieren einer Polymerschmelze zu schaffen, dessen Imprägnierungskörper hinsichtlich einer Vergrösserung des Schmelzestroms günstig strukturiert ist: Es soll gleichzeitig das Volumen, das dem Imprägnierungskörper zur Verfügung zu stellen ist, möglichst klein ausfallen und die Imprägnierungskapazität entsprechend dem zu vergrössernden Schmelzestrom erhöht werden. Diese Aufgabe lässt sich durch die im Anspruch 1 definierte Vorrichtung lösen.

Die Vorrichtung ist zum Imprägnieren einer Schmelze von Polymer mit einem Fluid vorgesehen. Das Fluid kann ein Treibmittel oder ein Additiv sein. Ein Imprägnieren mit dem Treibmittel wird insbesondere zwecks Herstellung geschäumter Formteile mit einer Spritzgiessmaschine durchgeführt. Ein Imprägnierungskörper umfasst einen Schmelzekanal und ein Kanalsystem zur Fluideinspeisung. Das in diesem System geführte Fluid ist durch gasdurchlässiges Material, insbesondere Sintermetall, von einem im Schmelzekanal geführten Schmelzestrom getrennt. Der Imprägnierungskörper umfasst eine Vielzahl von Schmelzekanälen, die beispielsweise jeweils durch Materialabtrag aus einem homogenen Stück des gasdurchlässigen Materials gefertigt sind. Jeder Schmelzekanal weist zwischen einem Ein- und Austritt an dessen inneren Oberfläche eine die Imprägnierung ermöglichende Offenporigkeit auf. Die Schmelzekanäle können zur Förderung der Verteilung des eindiffundierten Fluides im Schmelzestrom statische Mischer enthalten.

Die Schmelzekanäle, deren Längen in Bezug auf die Querschnittsform und den Imprägnierungsprozess festzulegen sind, lassen sich derart im Imprägnierungskörper verteilen, dass die Imprägnierungskapazität proportional zum Volumen des Imprägnierungskörpers ist; damit ist die genannte Aufgabe gelöst. Diese Proportionalität zeigen die nachfolgend beschriebenen Ausführungsbeispiele zumindest angenähert.

Die abhängigen Ansprüche 2 bis 9 betreffen vorteilhafte Ausführungsformen der erfindungsgemässen Vorrichtung. Verwendungen dieser Vorrichtung sind Gegenstand des Anspruchs 10.

Nachfolgend wird die Erfindung anhand der Zeichnungen erläutert. Es zeigen:
- Fig. 1: eine schematische Darstellung einer Vorrichtung zum Imprägnieren einer Polymerschmelze, die am Kopf eines Plastifizierungsaggregats angeordnet ist,
- Fig. 2: eine Nadelverschlussdüse mit einem hydraulischen oder pneumatischen Nadelantrieb,
- Fig. 3: einen Querschnitt durch einen erfindungsgemässen Imprägnierungskörper, der aus sieben Segmenten zusammen gesetzt ist,
- Fig. 4: ausschnittsweise dargestellit eine Seitenansicht des Imprägnierungskörpers der Fig. 3,
- Fig. 5: ein Segment einer besonderen Ausführungsform des Imprägnierungskörpers,
- Fig. 6: einen Längsschnitt durch das Segment der Fig. 5 in der Region von Kanaleingängen,
- Fig. 7: eine weitere Ausführungsform des Imprägnierungskörpers und
- Fig. 8: einen Querschnitt durch ein weiteres Segment, der die Form eines Kreissektors hat.

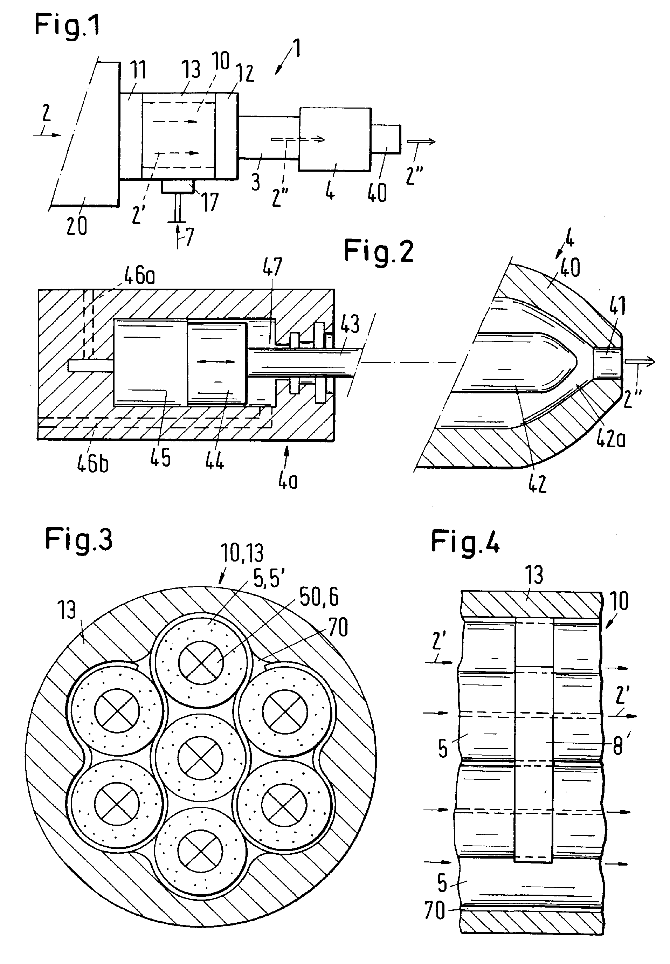

Eine Vorrichtung 1 zum Imprägnieren eines Schmelzestroms 2'- wie in Fig. 1 schematisch dargestellt - ist an einem Plastifizierungsaggregat 20 angeordnet, in dem ein zunächst granulatförmiges Polymer 2 unter Heizen und mittels einem Schneckenzylinder plastifiziert und damit in den Schmelzestrom 2' umgeformt wird. Nachdem der Schmelzestrom 2' in einem Imprägnierungskörper 10 ein Fluid 7 aufgenommen hat, gelangt die imprägnierte Schmelze 2" durch ein Zwischenstück 3, das einen statischen Mischer enthalten kann, in ein Verschlussorgan 4. Dieses Verschlussorgan ist mit Vorteil eine Nadelverschlussdüse 4, wie sie in Fig. 2 illustriert ist. Eine Nadel der Nadelverschlussdüse 4 wird mit einem hydraulischen oder pneumatischen Arbeitsmittel in einer Schliessstellung gehalten, wobei dieses fluide Arbeitsmittel beispielsweise ein komprimiertes, überkritisches Gas ist. Für das fluide Arbeitsmittel kann das gleiche Fluid 7 wie für das Imprägnieren des Polymerschmelze verwendet werden. Übersteigt der Druck des Schmelzestroms 2' einen durch das fluide Arbeitsmittel vorgegebenen Maximaldruck, so tritt die imprägnierte Schmelze 2" an der Spitze 40 des Verschlussorgans 4 aus. Die Spitze 40 ist an eine nicht dargestellte Spritzgiessmaschine angeschlossen, mit der beispielsweise geschäumte Formteile herstellbar sind.

Das Fluid 7, mit dem der Schmelzestrom 2' im Imprägnierungskörper 10 der Vorrichtung 1 imprägniert wird, ist ein Treibmittel oder ein Additiv. Beispiele für Additive sind: ein Färbemittel, ein Medikament, eine Verarbeitungshilfe wie zum Beispiel ein Antiblock-Additiv, ein Flammschutzmittel oder ein Vernetzer bei reagierenden Formmassen. Das Additiv wird durch einen Anschluss 17 in die Vorrichtung 1 eingespeist und dort in einem Kanalsystem zur Fluideinspeisung verteilt. Der Imprägnierungskörper 10 ist in ein Gehäuse eingelegt, das sich aus einem Deckel 11, einem Boden 12 und einem Mantel 13 zusammensetzt. Er weist bei der bekannten Vorrichtung 1 einen ringspaltförmigen Schmelzekanal auf und umfasst ausserdem das genannte Kanalsystem. Die Kanäle dieses Systems sind durch gasdurchlässiges Material, nämlich Sintermetall, vom Schmelzekanal getrennt.

Das in Fig. 2 gezeigte Verschlussorgan 4 umfasst einen hydraulischen oder pneumatischen Nadelantrieb 4a, mit dem eine Ventilnadel 42 zum Verschliessen einer Düse 41 auf einen Ventilsitz 42a gepresst wird. Das fluide Arbeitsmittel übt über eine kanalförmige Verbindung 46a einen Schliessdruck auf einen Kolben 44 aus, der in einem Zylinder 45 hin- und herbewegbar ist und der über eine Stange 43 mit der Ventilnadel 42 starr verbunden ist. Bei einer Schliessbewegung wird durch einen zweiten Verbindungskanal 46b fluides Arbeitsmittel aus dem Zylinder 45 abgelassen. Eine Dichtung 47 hindert die Polymerschmelze 2" an einem Eintritt in den Zylinder 45. Bei einem ungewollten Druckaufbau in der Schmelze öffnet sich das Verschlussorgan 4 passiv und ermöglicht so eine Druckentlastung. (Es ist auch ein aktives Öffnen möglich, wenn über den Verbindungskanal 46b beaufschlagt und über die Verbindung 46a entlastet wird.)

Erfindungsgemäss umfasst der Imprägnierungskörper 10 eine Vielzahl von Schmelzekanälen. Die Schmelzekanäle sind z. B. jeweils durch Materialabtrag aus einem homogenen Stück des gasdurchlässigen Materials gefertigt. Der Materialabtrag wird insbesondere mittels Funkenerosion ausgeführt, so dass jeder Schmelzekanal zwischen einem Ein- sowie Austritt an der inneren Oberfläche eine Offenporigkeit aufweist. Diese Offenporigkeit ermöglicht die Imprägnierung des Schmelzestroms 2' mit dem Fluid 7, das in die Poren des gasdurchlässigen Materials eingepresst wird. Der poröse Imprägnierungskörper 10 kann auch durch ein Formgebungsverfahren ohne wesentlichen Materialabtrag gefertigt werden, beispielsweise durch Pressen von Metallpulver zu einem Kanäle enthaltenden Grünkörper, der schliesslich gesintert und gegebenenfalls nachbearbeitet wird. Die Schmelzekanäle können statische Mischer enthalten, mit denen sich die Verteilung des eingebrachten Fluides im Schmelzestrom 2' verbessern lässt.

Alle Schmelzekanäle sind hinsichtlich Form und Anordnung - insbesondere hinsichtlich einer Anordnung bezüglich dem Kanalsystem zur Fluideinspeisung - weitgehend gleich oder äquivalent ausgebildet, so dass in jedem Schmelzekanal bis auf Abweichungen von höchstens 10 %, vorzugsweise 1 % spezifisch, d.h. auf die Masse bezogen, gleich viel Fluid 7 durch den Schmelzestrom 2' aufnehmbar ist. Dies gilt beispielsweise bei dem in den Figuren 3 und 4 dargestellten lmprägnierungskörper 10. Sind alle Schmelzekanäle äquivalent ausgebildet, so ist die Imprägnierungskapazität der Vorrichtung 1 im wesentlichen proportional zur Anzahl der Schmelzekanäle und somit - bei einer gleichmässigen Verteilung - auch proportional zum Volumen des Imprägnierungskörpers. Bei den beschriebenen Ausführungsbeispielen liegt eine gleichmässige Verteilung der Schmelzekanäle vor.

Fig. 3 zeigt einen Querschnitt durch den erfindungsgemässen Imprägnierungskörper 10, der aus einer Mehrzahl von Segmenten 5 zusammengesetzt ist. Jedes Segment 5 ist ein aus dem gasdurchlässigen Material 5' gebildetes Rohr, dessen Lumen eine Kavität bildet, welche die Funktion eines Schmelzekanals 50 hat. Die Lumen enthalten statische Mischer 6. Die Segmente 5 sind raumsparend im Innenraum des Gehäusemantels 13 angeordnet. Es bestehen Lücken zwischen den Segmenten 5. Die Lücken bilden einen Teil des Kanalsystems 70 zur Einspeisung des Fluids 7. Sie sind mittels Abstandhalteelementen 8 frei gehalten, wobei diese Elemente 8 zusätzlich als Stützelemente zur mechanischen Verstärkung des Imprägnierungskörpers 10 genutzt werden können. Die Abstandhalteelemente 8 sind im dargestellten Beispiel spangenartig ausgebildet und durch Formung jeweils eines Metallstreifens gefertigt. Die Seitenansicht in Fig. 4 zeigt ein einzelnes solches Abstandhalteelement 8. Es wird eine Mehrzahl solcher Elemente 8 verwendet, wobei die einzelnen Elemente 8 mit Vorteil verschieden orientiert eingelegt werden. Wie aus Fig. 3 ersichtlich ist, bestehen sechs Orientierungsmöglichkeiten. Werden die Abstandhalteelemente 8 in Kanalrichtung dicht neben einander angeordnet, so üben sie eine maximale Stützwirkung auf die Segmente 5 aus, deren gasdurchlässiges Material 5' mechanisch nicht sehr stabil ist. Im Fall einer Panne, bei welcher der Druck des Fluids 7 stark abfällt, könnten die nicht gestützten Segmente 5 bersten.

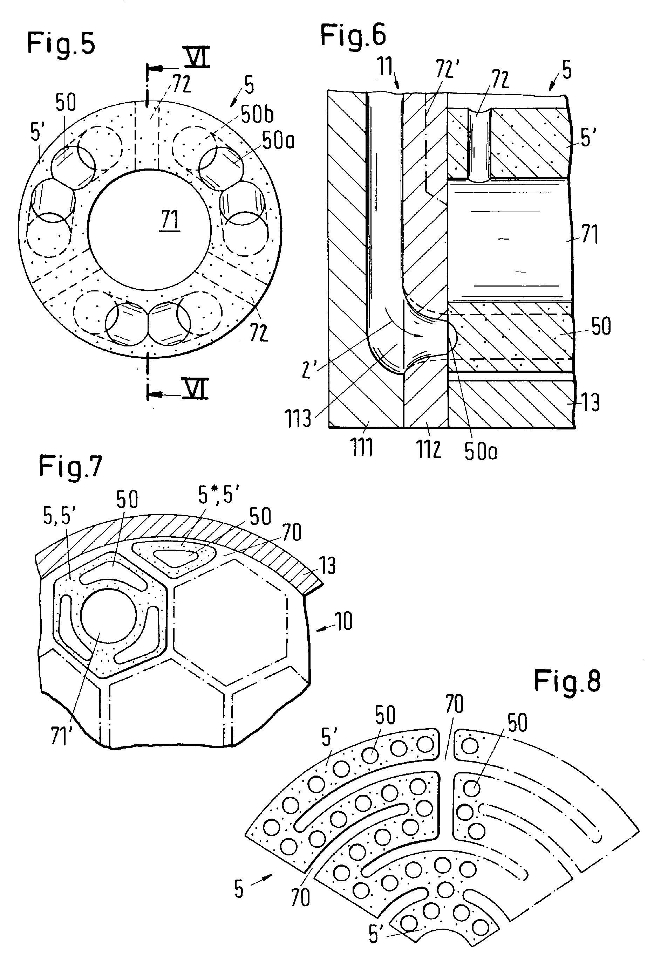

Fig. 5 zeigt ein Segment 5 einer besonderen Ausführungsform des Imprägnierungskörpers 10. Einen Längsschnitt durch dasselbe Segment 5 zeigt Fig. 6 (Schnitt längs der Linie VI - VI in Fig. 5), wobei ausschnittsweise eine Region im Bereich von Kanaleingängen einschliesslich Deckel 11 und Mantel 13 dargestellt ist. Es gibt verschiedene Kanalsorten: a) eine zentrale, kanalförmige Kavität 71, nämlich das Lumen des rohrförmigen Segments 5, b) Schmelzekanäle 50 in der Rohrwandung, die aus dem gasdurchlässigen Material 5' besteht, und c) Verbindungskanäle 72. Die zentrale Kavität 71 und die Verbindungskanäle 72 sind Teile des Kanalsystems 70 zur Einspeisung des Fluids 7. Die Schmelzekanäle 50, die einen kreisförmigen Querschnitt haben, verbinden jeweils einen Eingangsquerschnitt 50a mit einem Ausgangsquerschnitt 50b. Sie sind leicht geneigt in Bezug auf die Achse der zentralen Kavität 71 ausgerichtet und zwar so, dass in der Region der Eingangsquerschnitte 50a Platz für die Verbindungskanäle 72 geschaffen ist. Es sind hier keine in den Schmelzekanälen 50 angeordneten statischen Mischer vorgesehen. Die Schmelzekanäle 50 können auch unidirektional und parallel zur Achse ausgerichtet sein. In diesem Fall ist es vorteilhaft, eine Verbindung der zentralen Kavität 71 zum weiteren Kanalsystem 70 im Deckel 11 herzustellen, wie es durch die strichpunktierte Linie 72' in Fig. 6 angedeutet ist.

Die Schmelzekanäle 50 sind in deren Ein- und Austrittsbereichen über Schmelze-Verteiler bzw. Sammler miteinander verbunden und bilden so eine Parallelschaltung. Der Deckel 11 ist aus zwei Lagen 111 und 112 zusammen gesetzt (Gleiches gilt für den Boden 12), wobei in diese Lagen 111, 112 Leitstrukturen 113 zwecks Verteilung (bzw. Sammlung im Boden 12) des Schmelzestroms 2' eingearbeitet sind. Die Formgebung der Leitstrukturen 113 ist strömungsgünstig ausgeführt, so dass sich keine Stagnierungszonen im Schmelzestrom 2' ausbilden. Auch die Ein- und Austrittsbereiche der Schmelzekanäle 50 können beispielsweise trichterförmig ausgebildet sein (nicht dargestellt), so dass diese eine strömungsgünstige Form aufweisen.

Beim Herstellen einer Offenporigkeit an Oberflächen des Imprägnierungskörpers 10 und insbesondere beim Herstellen der Offenporigkeit an den inneren Oberflächen der Schmelzekanäle 50 wird der Materialabtrag mit Vorteil mittels Funkenerosion ausgeführt. Ein zumindest teilweiser Porenverschluss kann an ausgewählten Stellen mittels einer spanenden Bearbeitung erzeugt werden. Dabei kann zwecks einer weitergehenden Abdichtung und gegebenenfalls Härtung zusätzlich eine Beschichtung vorgesehen sein. Eine derartige Behandlung kann an den Stirnseiten der Segmente 5 vorteilhaft sein, wo diese mit dem Deckel 11 bzw. Boden 12 in Kontakt stehen. Die Verbindungskanäle 72 können mittels einem spanenden Bohren erzeugt werden, da diese Kanäle 72 keine Offenporigkeit aufweisen müssen.

Alle oder eine Mehrzahl der Segmente 5 sind identisch ausgebildet. Die Segmente 5 sind säulenförmig oder prismatisch, wobei vorzugsweise der Querschnitt des Segments 5 kreisförmig oder hexagonal ist. In Fig. 7 ist eine weitere Ausführungsform des Imprägnierungskörpers 10 gezeigt, bei der hexagonale Segmente 5 eine regelmässige Anordnung mit der Symmetrie einer Wabenstruktur bilden. Segmente 5*, die einen kleineren Querschnitt mit nur einem Schmelzekanal 50 haben, füllen in der Randzone des Imprägnierungskörpers 10 beim Mantel 13 Lücken, die durch die Wabenstruktur nicht gefüllt werden können. In den hexagonalen Segmenten 5 sind drei Schmelzekanäle 50 mit spaltförmigen Querschnitten jeweils um eine zentrale Kavität 71' angeordnet, die mittels einer kommunizierenden Verbindung (nicht dargestellt) Teil des Kanalsystems 70 zur Fluideinspeisung bildet. Diese Kavität 71' ist wiederum kanalartig ausgebildet und parallel zu den Schmelzekanälen 50 angeordnet. Spaltförmige Lücken zwischen den Segmenten 5, 5*, die einen weiteren Teil des Kanalsystems 70 zur Fluideinspeisung bilden, werden wie bereits bei der Ausführungsform der Fig. 3 mittels Abstandhalteelementen 8 (in Fig. 7 nicht dargestellt) frei gehalten.

Die Imprägnierungskörper 10 der Figuren 3 und 7 weisen eine Zentralachse in Fliessrichtung des Schmelzestroms 2' auf. Die Segmente 5 bilden um diese Zentralachse eine regelmässige, symmetrische Anordnung. Die Segmente 5 sind insbesondere um einen zentralen Teil angeordnet. Dieser zentrale Teil kann ein Segment 5, ein Füllkörper oder auch ein Antrieb 4a für eine Nadelverschlussdüse 4 - siehe Fig. 2 - sein.

Der Querschnitt des Segments 5 kann auch die Form eines Kreissektors haben, insbesondere eines stumpfen Kreissektors, bei dem die Sektorspitze fehlt: siehe Fig. 8. Anstelle der fehlenden Sektorspitze kann wieder ein zusätzlicher zentraler Teil, beispielsweise die Nadelverschlussdüse 4 vorgesehen sein. Mäandrisch zusammen hängende Wandteile aus dem gasdurchlässigen Material 5' und Gassen zwischen den Wandteilen bilden das Segment 5. Die Gassen sind Teile des Kanalsystems 70 zur Einspeisung des Fluids 7. In den Wandteilen sind die Schmelzekanäle 50 unidirektional und in Form einer Kette mit weitgehend gleich grossen Abständen der Schmelzekanäle 50 angeordnet. Drei der in Fig. 8 gezeigten Segmente 5 bilden zusammen den Imprägnierungskörper 10. Die Anzahl der Segmente kann selbstverständlich auch zwei oder grösser als drei sein. Im Extremfall kann der Imprägnierungskörper 10 auch monolithisch, nur aus einem Teil bestehend sein.

Eine bevorzugte Verwendung der erfindungsgemässen Vorrichtung 1 ist die Imprägnierung eines geschmolzenen Polymers 2 mit einem physikalischen Treibmittel als Fluid 7, nämlich zum Herstellen geschäumter Formteile in einer Spritzgiessmaschine (vgl. Fig. 1). Bei einer weiteren Verwendung ist das Fluid 7 ein Additiv, das zu einem anderen Zweck, beispielsweise zum Anfärben des Polymers 2 eingesetzt wird.

## Patentansprüche

1. Vorrichtung (1) zum Imprägnieren einer Schmelze von Polymer (2) mit einem Fluid (7), das als ein Treibmittel oder Additiv vorgesehen ist, insbesondere zwecks Herstellung geschäumter Formteile mit einer Spritzgiessmaschine, wobei ein Imprägnierungskörper (10) einen Schmelzekanal (50) und ein Kanalsystem (70) zur Fluideinspeisung umfasst und das in diesem System geführte Fluid durch gasdurchlässiges Material (5'), insbesondere Sintermetall, von einem im Schmelzekanal geführten Schmelzestrom (2') getrennt ist,
**dadurch gekennzeichnet, dass** der Imprägnierungskörper eine Vielzahl von Schmelzekanälen umfasst, die aus dem gasdurchlässigen Material derart gefertigt sind, dass jeder Schmelzekanal zwischen einem Ein- sowie Austritt (50a, 50b) an dessen inneren Oberfläche eine die Imprägnierung ermöglichende Offenporigkeit aufweist, wobei insbesondere die Schmelzekanäle jeweils durch Materialabtrag aus einem Stück des gasdurchlässigen Materials gefertigt sind oder der Imprägnierungskörper durch ein Formgebungsverfahren gefertigt ist, bei dem gegebenenfalls ein Materialabtrag lediglich bei einer Nachbearbeitung erforderlich ist,
und wobei die Schmelzekanäle statische Mischer (6) enthalten können zur Förderung der Verteilung des eindiffundierten Fluides im Schmelzestrom.

2. Vorrichtung nach Anspruch 1, **dadurch gekennzeichnet, dass** die Schmelzekanäle (50) in Ein- und Austrittsbereichen über Schmelze-Verteiler bzw. Sammler miteinander verbunden sind und so eine Parallelschaltung bilden, dass der Imprägnierungskörper (10) in einem Gehäuse angeordnet ist, welches aus einem Deckel (11), einem Boden (12) und einem Mantel (13) zusammengesetzt ist, und dass eine Formgebung von Leitstrukturen (113) im Deckel, Boden und/oder am Imprägnierungskörper zwecks Verteilung bzw. Sammlung der Schmelze strömungsgünstig - d.h. Stagnierungszonen im Schmelzestrom vermeidend - ausgeführt ist.

3. Vorrichtung nach Anspruch 1 oder 2, **dadurch gekennzeichnet, dass** alle Schmelzekanäle (50) hinsichtlich Form und Anordnung, insbesondere hinsichtlich Anordnung bezüglich dem Kanalsystem (70) zur Fluideinspeisung, weitgehend gleich oder äquivalent ausgebildet sind, so dass in jedem Schmelzekanal bis auf Abweichungen von höchstens 10 %, vorzugsweise 1 % spezifisch, d.h. auf die Masse bezogen, gleich viel Fluid (7) durch den Schmelzestrom (2') aufnehmbar ist.

4. Vorrichtung nach einem der Ansprüche 1 bis 3, **dadurch gekennzeichnet, dass** beim Herstellen einer Offenporigkeit an Oberflächen des Imprägnierungskörper (10), insbesondere beim Herstellen der Offenporigkeit an den inneren Kanaloberflächen, ein Materialabtrag mittels Funkenerosion hergestellt ist, und dass ein zumindest teilweiser Porenverschluss an ausgewählten Stellen mittels einer spanenden Bearbeitung erzeugt sein kann, wobei zu einer weitergehenden Abdichtung und gegebenenfalls Härtung zusätzlich eine Beschichtung vorgesehen sein kann.

5. Vorrichtung nach einem der Ansprüche 1 bis 4, **dadurch gekennzeichnet, dass** der Imprägnierungskörper (10) aus einer Mehrzahl von Segmenten (5) zusammen gesetzt ist und dass jedes Segment mindestens einen Schmelzekanal (50), vorzugsweise eine Mehrzahl von Schmelzekanälen umfasst.

6. Vorrichtung nach Anspruch 5, **dadurch gekennzeichnet, dass** alle oder eine Mehrzahl der Segmente (5) identisch ausgebildet sind und dass die Segmente säulenförmig oder prismatisch sind, wobei vorzugsweise der Querschnitt des Segments kreisförmig oder hexagonal ist oder die Form eines Kreissektors hat, insbesondere eines stumpfen Kreissektors, bei dem die Sektorspitze fehlt.

7. Vorrichtung nach Anspruch 5 oder 6, **dadurch gekennzeichnet, dass** mindestens die Mehrzahl der Segmente (5) Kavitäten (71) enthält, die mittels kommunizierender Verbindung (72) Teile des Kanalsystems (70) zur Fluideinspeisung bilden, wobei diese Kavitäten vorzugsweise kanalartig ausgebildet und parallel zu den Schmelzekanälen (50) angeordnet sind, und dass vorzugsweise Lücken zwischen den Segmenten bestehen und die Lücken zumindest einen Teil des Kanalsystems zur Fluideinspeisung bilden, dass die Lücken mittels Abstandhalteelementen (8) frei gehalten sind, wobei insbesondere diese Abstandhalteelemente zusätzlich als Stützelemente zur mechanischen Verstärkung des Imprägnierungskörper (10) genutzt sind.

8. Vorrichtung nach einem der Ansprüche 5 bis 7, **dadurch gekennzeichnet, dass** der Imprägnierungskörper (10) eine Zentralachse in Fliessrichtung des Schmelzestroms (2') aufweist und die Segmente (5) um diese Zentralachse eine regelmässige, insbesondere symmetrische Anordnung bilden.

9. Vorrichtung nach einem der Ansprüche 5 bis 8, **dadurch gekennzeichnet, dass** die Segmente um einen zentralen Teil angeordnet sind und dass der zentrale Teil ein Füllkörper ist oder ein Antrieb für eine Nadelverschlussdüse ist, die mit komprimiertem Arbeitsgas betätigbar ist, wobei für dieses Arbeitsgas insbesondere das gleiche Fluid wie für das Imprägnieren der Polymerschmelze verwendbar ist.

10. Verwendung einer Vorrichtung gemäss einem der Ansprüche 1 bis 9, **dadurch gekennzeichnet, dass** geschäumte Polymerkörper durch Extrusion oder als Formteile in einer Spritzgiessmaschine hergestellt werden, wobei das Fluid ein physikalisches Treibmittel ist, insbesondere ein Gas, vorzugsweise CO₂, N₂, Luft, ein Edelgas, Wasserdampf oder ein Gemisch von mindestens zwei dieser Gase, oder dass das Fluid ein Additiv ist, nämlich ein Färbemittel, ein Medikament, eine Verarbeitungshilfe wie zum Beispiel ein Antiblock-Additiv, ein Flammschutzmittel oder ein Vernetzer bei reagierenden Formmassen.
